# EUROPÄISCHE PATENTANMELDUNG

(11) **EP 1 932 805 A1**
(43) Veröffentlichungstag der Anmeldung: **18.06.2008**
(21) Anmeldenummer: 06405523.9
(22) Anmeldetag: 15.12.2006
(51) Int. Cl.: C01B 31/02, B32B 15/08, B32B 15/14

(54) **Flächengebilde enthaltend Kohlenstoffnanoröhrchen und Verfahren zu deren Herstellung**

(71) Anmelder: Alcan Technology & Management Ltd., 8212 Neuhausen am Rheinfall (CH)
(72) Erfinder: Adams, Horst, 9450 Alststätten (CH); Lutz, Ernst, 8004 Zürich (CH)

(57) **Zusammenfassung**

Flächengebilde enthaltend Kohlenstoffnanoröhrchen (CNT) in dem wenigstens eine Schicht eines Metalls und/oder wenigstens eine Schicht eines Polymers und wenigstens eine Lage CNT übereinander geschichtet vorliegen.

Das Metall kann in Form einer Folie, einem Band oder einem Blech, die Polymere in Form einer Folie, einem Band oder einem Block und die CNT in Form von wenigstens einem Gerüstkörper, eines Geleges, eines Gewirkes, eines Geflechtes oder eines Gewebes oder als Fasern, als Faserbündel, als Fäden, als Gespinst oder als Haufwerk etc. vorliegen. Die Metalle oder Polymere können auch als als Beschichtung eines 2- oder 3-dimensionalen Gerüstkörpers, Einzelfasern, Faserbündeln, Stapelfasern, glatte Filamentgarne, Bündel von glatten unverdrehten gestreckten Fasern, Rovings, Fasersträngen, Faserknäueln, Fäden, Gespinsten oder Haufwerken, Gelegen, Geweben, Geflechten, Gewirken oder Gestricken aus CNT vorliegen. Das Metall und/oder das Polymer sowie die CNT können jeweils in wenigstens einer Lage vorliegend, durch wenigstens einen Walzenspalt unter Druckbeaufschlagung hindurchgeführt und zu dem Flächengebilde verarbeitet werden.

## Beschreibung

Vorliegende Erfindung betrifft Flächengebilde enthaltend Kohlenstoffnanoröhrchen. Die Erfindung betrifft auch ein Verfahren zur Herstellung des Flächengebildes und die Verwendung des Flächengebildes.

Es sind Kohlenstoffnanoröhrchen bekannt. Weitere äquivalente Begriffe für Kohlenstoffnanoröhrchen sind nanoskalige Kohlenstoffröhrchen oder Carbon Nano Tubes und die Kurzbezeichnung "CNT". Nachfolgend wird die in der Fachwelt gebräuchlichste Form, nämlich "CNT", weiterverwendet. Die CNT stellen Fullerene dar und sind Kohlenstoffmodifikationen mit geschlossener polyedrischer Struktur. Bekannte Anwendungsgebiete für CNT sind im Bereich der Halbleiter zu finden oder zur Verbesserung der mechanischer Eigenschaften von herkömmlichen Kunststoffen (www.de.wikipedia.org unter "Kohlenstoffnanoröhre").

Aufgabe vorliegender Erfindung ist es, den Einsatzbereich der CNT zu erweitern und neue Flächengebilde und Verfahren zu deren Herstellung vorzuschlagen.

Erfindungsgemäss wird dies durch ein Flächengebilde erreicht, in dem wenigstens eine Schicht eines Metalls und/oder wenigstens eine Schicht eines Polymers abwechslungsweise mit wenigstens einer Lage aus CNT übereinander geschichtet vorliegen.

Das Flächengebildet kann, insbesondere enthaltend Metall, in Form einer Folie, eines Bandes oder eines Bleches vorliegen, wobei Abschnitte, wie Blätter oder Bögen aus Folien oder Bändern oder Abschnitte oder Ausschnitte aus Blechen, mit umfasst sind.

Das Flächengebilde kann als Folie, als Band, Block oder als Blech enthaltend Metall, in beispielsweise einer Dicke von 7 µm und grösser vorliegen.

Geeignete Ausgangsmaterialien aus Metall sind Folien, beispielsweise in einer Dicke von 4,5 µm bis 20 µm, dünne Bänder im Dickenbereich von 21 µm bis 350 µm, Bänder mit einer Dicke über 350 µm bis 3 mm und Bleche mit den beispielhaften Dicken von 0,4 mm bis 200 mm und mehr, vorzugsweise bis 50 mm.

Im erfindungsgemässen Flächengebilde kann das Metall in einer oder mehreren Schichten vorliegen und die einzelnen Schichten des Metalls können eine Dicke von 4,5 µm bis 5'000 µm, vorteilhaft von 10 µm bis 1'000 µm, aufweisen.

Das Flächengebilde kann, insbesondere enthaltend Polymere, in Form einer Folie, eines Bandes oder eines Blockes vorliegen, wobei Abschnitte oder Ausschnitte, wie Blätter oder Bögen aus Folien oder Bändern, mit umfasst sind.

Die Ausgangsmaterialien aus Polymeren sind Folien, beispielsweise in einer Dicke von 7 µm bis 2000 µm, resp. Bänder oder Blöcke, mit den beispielhaften Dicken von bis zu 200 mm und mehr, vorzugsweise bis zu 50 mm.

Im Flächengebilde kann das Polymer in einer oder mehreren Schichten vorliegen und die einzelnen Schichten des Polymers können eine Dicke von 7 µm bis 5'000 µm, vorteilhaft von 15 µm bis 1'000 µm, aufweisen.

Im Flächengebilde können die Dicken der einzelnen Lagen der CNT von 10 nm bis 100'000 nm, vorteilhaft von 20 nm bis 50'000 nm, betragen.

Gemäss vorliegender Erfindung kann innerhalb des Flächengebildes zweckmässig 2, 3, 4, 5 etc. bis 1000 Schichten, vorzugsweise 2, 3, 4, 5 etc. bis 500 Schichten, eines Metalls, abwechslungsweise mit wenigstens 1, 2, 3, 4 etc., resp. bis 999, oder vorzugsweise 2, 3, 4 etc., resp. 499, Lagen aus CNT, geschichtet sein. Typische Schichtfolgen sind beispielsweise Metall/CNT/Metall oder Metall/CNT/Metall/CNT/Metall usw.

In anderer Ausführungsform können innerhalb des Flächengebildes zweckmässig 2 oder mehrere, wie 3, 4, 5, 6 etc. bis 1000 Schichten eines Kunststoffes abwechslungsweise mit einer Lage, resp. 2, 3, 4, 5 etc. bis 999 Lage, aus CNT geschichtet sein. Dies ergibt Schichtfolgen, wie z.B. Polymer/CNT/Polymer, Polymer/CNT/Polymer/CNT/Polymer etc.

In besonderer Ausführungsform des Flächengebildes kann eine Schicht eines Metalls oder eines Polymers einer Lage CNT anliegen. Dies ergibt die Schichtfolge Metall/CNT oder Polymer/CNT.

In anderer Ausführungsform des Flächengebildes kann einer Schicht eines Metalls oder eines Polymers beidseitig je eine Lage CNT anliegen. Dies ergibt die Schichtfolge CNT/Metall/CNT oder CNT/Polymer/CNT. In anderen Schichtfolgen kann CNT eine oder beide aussen liegenden Lagen am Flächengebilde, z.B. einer Folie, Band, Blech, Block etc., bilden.

Durch die Dicke des Flächengebildes hindurch können beispielsweise 1 bis 1000, zweckmässig 1 bis 500, vorzugsweise 10 bis 50 CNT-Schichten angeordnet sein. Die Flächengebilde können in einer 1 mm dicken Schicht beispielhaft 500 bis 1000 Schichten, abwechselnd aus Metall, wie Aluminium, und CNT, enthalten.

Die Schichten, resp. Lagen, liegen sich jeweils auf ihrer Hauptseite oder ihren Hauptseiten an. Einzelne der Schichten oder Lagen können sich über die ganze Ausdehnung der Länge und Breite des Flächengebildes oder nur über Teile davon erstrecken.

Das Flächengebilde nach vorliegender Erfindung kann Metalle enthalten, wie Eisen- und Nichteisenmetalle, zweckmässig Eisenmetalle aus der Reihe des Eisens, Kobalts und Nickels, deren Legierungen sowie Stähle, Nichteisenmetallen, zweckmässig Aluminium, Magnesium und Titan sowie deren Legierungen, Metalle aus der Reihe Vanadium, Chrom, Mangan, Kupfer, Zink, Zinn, Tantal oder Wolfram und Legierungen davon oder die Legierungen aus der Reihe von Messing und Bronze oder Edelmetalle aus der Reihe Rhodium, Palladium, Platin, Gold und Silber. Die Metalle können sortenrein oder in Mischung untereinander oder als Legierungen enthalten sein.

Das Flächengebilde enthält bevorzugt als Metall Aluminium oder dessen Legierungen und wird zweckmässig als Folie, Band oder Blech oder Abschnitten davon, d.h. als Einzelblätter oder Blechabschnitte, eingesetzt.

Als Polymere eignen sich thermoplastische, elastische oder duroplastische Polymere. Beispiele sind Polyolefine, wie Polypropylen oder Polyethylen, Cycloolefin-Copolymere, Polyamide, wie die Polyamide 6, 12, 66, 610 oder 612, Polyester, wie Polyethylenterephtalat, Polyacrylnitril, Polystyrole, Polycarbonate, Polyvinylchlorid, Polyvinylacetat, Styrol-Butadien-Copolymere, Acrylnitril-Butadien-Copolymere, Polyurethane, Polyacrylate und Copolymere, Alkydharze, Epoxide, Phenol-Formaldehydharze, Harnstoff-Formaldehydharze usw. Entsprechende Co- oder Pfropfpolymere sind mit umfasst. Die Polymere werden sortenrein oder im Gemisch untereinander eingesetzt. Vorzugsweise werden die Polymere in Folienform, fallweise in Platten- oder Blockform angewendet. Die Folien sind erhältlich durch die an sich bekannten Verfahren, wie Extrusion, Blasextrusion, Giessen, Curtain Coating usw.

Als CNT können beispielsweise katalytisch, im Lichtbogen, mittels Laser oder durch Gaszersetzung erzeugte Materialien verwendet werden. Die CNT können einwandig oder mehrwandig, wie zweiwandig, sein. Die CNT können offene oder geschlossene Röhren sein. Die CNT können beispielsweise von 0,4 nm (Nanometer) bis 50 nm Durchmesser und eine Länge von 5 nm bis 50'000 nm aufweisen. Die CNT können auch schwammähnliche Gebilde, d.h. 2- oder 3-dimensionale Gerüstkörper, aus gegenseitig vernetzten Kohlenstoffnanoröhrchen darstellen. Der Durchmesser der einzelnen Röhrchen bewegt sich dabei im oben angegebenen Bereich von z.B. 0,4 nm bis 50 nm. Die Ausdehnung der beispielhaft mit 5 nm bis 50'000 nm, vorteilhaft mit 1'000 nm bis 50'000 nm in jeder der Dimensionen angegeben werden.

Die aus den Produktionsverfahren resultierenden CNT können beispielsweise in Rohform als 2- oder 3-dimensionale Gerüstkörper, Einzelfasern, Faserbündel, Stapelfasern, glattes Filamentgarn, Bündel von glatten unverdrehten gestreckten Fasern, sog. Rovings, Faserstränge, Faserknäuel, Fäden, Gespinste oder Haufwerke vorliegen. Typische Rohformen sind Gespinste, fallweise auch vertikal orientierte Nanorohranordnungen (auch "forests" genannt) oder Faserknäuel mit einer Nanorohrdicke von etwa 10 nm in einer Höhe von beispielsweise etwa 70 bis 300 µm. Die Nanorohre können in Schichten aus dem Gespinst abgetragen und fallweise durch Anlegen von äusserem Druck um bis auf das 400 fache verdichtet werden, wobei eine Gespinstdicke von noch beispielsweise 50 nm resultieren kann. Die CNT sind auch in Breiten von beispielsweise bis zu 5 cm kontinuierlich herstellbar. Die Rohformen können zur weiteren Verarbeitung zum Flächengebilde in Rohform eingesetzt werden oder können vorab zu Fasern, Faserknäueln, Faserbündeln, Stapelfasern, Rovings, Fäden, Gespinsten, Haufwerken, Gelegen, Gewirken, Geflechten oder Geweben verarbeitet und in dieser Form oder in verdichteter Form, beispielsweise 5 bis 400-fach verdichtet, eingesetzt werden. CNT-Fasergebilde oder Gespinste in einer Dicke von 5 bis 20 µm können einlagig auf ca. 50 nm verdichtet werden. Es ist auch möglich, von den "forests" die Fasern abzutragen oder abzuziehen und in Form einer unidirektionalen Monoschicht von Fasern oder in Form multipler Schichten von unidirektionalen Fasern zu verwenden. Die unidirektionale Monoschicht von Fasern oder die multiplen Schichten von unidirektionalen Fasern können ihrerseits übereinander geschichtet oder gestapelt werden, wobei sich die einzelnen Schichten oder Gruppen von Schichten überkreuzen können. Beispielsweise können sich die Schichten bezüglich der Faserausrichtung in einem Winkel von 15 bis 90° überkreuzen. Es ist auch möglich, von den "forests" die Fasern abzutragen oder abzuziehen und die Fasern zu Fäden zu verspinnen. Die Fasern können zu Garnen verarbeitet werden, wobei sog. 2-ply oder 4-ply Garne oder gestrickte oder geknotete Garne erzeugt und eingesetzt werden können. Die Fäden und Garne können zu Geweben, Gewirken, Geflechten, Gelegen oder Gestricken verarbeitet werden.

Nach vorliegender Erfindung können die CNT-Lagen als 2- oder 3-dimensionale Gerüstkörper, Einzefasern, Faserbündel, Stapelfasern, glattes Filamentgarn, Bündel von glatten unverdrehten gestreckten Fasern, sog. Rovings, Faserstränge, Faserknäuel, Fäden, Gespinste oder Haufwerke, Gelege, Gewebe, Geflecht, Gewirke oder Gestricke bestehend oder enthaltend CNT, oder der Verarbeitungsprodukte genannter Formen, nach dem Herstellungsprozess, im Flächengebilde vorliegen.

Nach vorliegender Erfindung können die CNT-Lagen als 2- oder 3-dimensionale Gerüstkörper, Einzelfasern, Faserbündel, Stapelfasern, glattes Filamentgarn, Bündel von glatten unverdrehten gestreckten Fasern, sog. Rovings, Faserstränge, Faserknäuel, Fäden, Gespinste oder Haufwerke, Gelege, Gewebe, Geflechte, Gewirke oder Gestricke bestehend oder enthaltend CNT mit einem oder mehreren der genannten Metalle oder Polymere beschichtet sein.

Die Beschichtung der CNT durch Metalle kann durch ein chemisches oder physikalisches Beschichtungsverfahren vorgenommen werden. Bevorzugt sind Vakuumdünnschichtverfahren, wobei das Metall in Form eines sog. Targetmaterials vorliegt und in einer Vakuumkammer im Vakuum durch einen Elektronenstrahl oder durch Sputtern in die Dampfphase übergeführt wird und sich das Metall auf den in der Vakuumkammer vorliegenden CNT in dünner Schicht abscheidet. In der Regel liegt in der Vakuumkammer der metallhaltige Dampf vor und die CNT werden dem metallhaltigen Dampf ausgesetzt oder kontinuierlich hindurch geführt. Das Verfahren kann auch reaktiv geführt werden. Es ist auch möglich, ein z.B. ein Gelege, Gewebe, Geflecht, Gewirk oder Gestrick aus CNT in einem Vakuudünnschichtverfahren mit Metall zu belegen, danach ein weiteres Gelege, Gewebe, Geflecht, Gewirk oder Gestrick aus CNT auf das beschichtete Material aufzulegen und neuerlich mit Metall zu bedampfen. Der Vorgang kann mehrfach wiederholt werden.

Die CNT können auch mit Polymeren beschichtet, z.B. als Prepregs, wie nasse oder halbtrockene Prepegs, vorliegen. Bei den nassen Prepegs wird das Halbzeug, wie Faser-, Stapelfaser- Rovings-, Gelege-, Gewebe-, Geflecht-, Gewirkhalbzeug etc. mit einer niedrigviskosen Polymermatrix imprägniert, resp. bei den halbtrockenen Prepegs wird das Halbzeug mit einem oder mehreren Reaktionsharzen, beispielsweise der genannten Polymere, imprägniert. In weiterer Form können sog. Sheet Moulding Compounds, d.h. flächig, fliessfähige aushärtende Pressmassen oder ausgehärtete Halbzeuge aus den CNT und den Polymeren erzeugt werden.

Das Flächengebilde nach vorliegender Erfindung kann beispielsweise 0,1 bis 50 Gew.-% CNT enthalten. Zweckmässig sind Mengen von 0,3 bis 40 Gew.-%, bevorzugt von 0,5 bis 20 Gew.-% und insbesondere 1 bis 10 Gew.-% CNT im flächenhaften Gut. Stellt Aluminium oder eine Aluminiumlegierung das Metall des Flächengebildes dar, so kann der Werkstoff zweckmässig 0,5 bis 20 Gew.-% CNT enthalten, wobei 3 bis 17 Gew.-% CNT bevorzugt und 3 bis 6 Gew.-% CNT besonders bevorzugt werden.

Das Flächengebilde kann eines oder mehrere der genannten Metalle und die genannten CNT enthalten oder daraus bestehen. Das Flächengebilde kann eines oder mehrere der genannten Metalle, eines oder mehrere der genannten Polymere und CNT enthalten oder daraus bestehen. Das Flächengebilde kann eines oder mehrere der genannten Polymere und CNT enthalten oder daraus bestehen. Es ist auch möglich, dass das vorstehend angeführte Flächengebilde zusätzliche Beimengungen, beispielsweise funktionelle Beimengungen, enthalten kann. Funktionelle Beimengungen sind beispielsweise Kohlenstoff, auch in Russ-, Graphit- und Diamantmodifikation, Gläser, Kohlenstofffasern, Kunststofffasern, wie Polyamid-, Aramid-, Polyester-, Acrylfasern etc., anorganische Fasern, Glasfasern, Silikate, keramische Materialien, Carbide oder Nitride des Aluminiums oder Siliciums, wie Aluminiumcarbid, Aluminiumnitrid, Siliciumcarbid oder Siliciumnitrid, beispielsweise auch in Faserform, sog. Whiskers.

Erfindungsgemäss das Metall in Form von wenigstens einer Folie, einem Band oder einem Blech und/oder die Polymere in Form von wenigstens einer Folie, einem Band oder einem Block und die CNT in Form von wenigstens einem Gerüstkörper, eines Geleges, eines Gewirkes oder eines Gewebes oder als Fasern, als Faserbündel, als Fäden, als Gespinst oder als Haufwerk, oder die Metalle oder Polymere als Beschichtung eines 2- oder 3-dimensionalen Gerüstkörpers, Einzelfasern, Faserbündeln, Stapelfasern, glatte Filamentgarne, Bündel von glatten unverdrehten gestreckten Fasern, sog. Rovings, Fasersträngen, Faserknäueln, Fäden, Gespinsten oder Haufwerken, Gelegen, Geweben, Geflechten, Gewirken oder Gestricken aus CNT in wenigstens einer Lage vorliegend, durch wenigstens einen Walzenspalt unter Druckbeaufschlagung hindurchgeführt.

Bevorzugt wird das Metall in Form von 2 Folien, Bändern oder Blechen und die CNT in Form von 2- oder 3-dimensionalen Gerüstkörpers, Einzelfasern, Faserbündeln, Stapelfasern, glatten Filamentgarnen, Bündeln von glatten unverdrehten gestreckten Fasern, sog. Rovings, Fasersträngen, Faserknäueln, Fäden, Gespinsten oder Haufwerken, Gelegen, Geweben, Geflechten, Gewirken oder Gestricken, zwischen den beiden Metallschichten angeordnet, durch wenigstens einen Walzenspalt unter Druckbeaufschlagung hindurchgeführt.

Auch bevorzugt werden 2- oder 3-dimensionale Gerüstkörper, Einzelfasern, Faserbündel, Stapelfasern, glatte Filamentgarne, Bündel von glatten unverdrehten gestreckten Fasern, sog. Rovings, Faserstränge, Faserknäuel, Fäden, Gespinste oder Haufwerke, Gelege, Gewebe, Geflechte, Gewirke oder Gestricke aus CNT, die mit Metall beschichtet sind, durch wenigstens einen Walzenspalt unter Druckbeaufschlagung hindurchgeführt. Selbstverständlich können auch mit Metall beschichtete CNT mit Folien, Bändern oder Blechen aus Metall und/oder unbeschichtete CNT, in beliebiger Materiallagenfolge unter Druckbeaufschlagung durch wenigstens einen Walzenspalt hindurch geführt werden.

Bei der Anwendung eines Polymers wird bevorzugt das Polymer in Form von 2 Folien, Bändern oder Blöcken und die CNT in Form von 2- oder 3-dimensionalen Gerüstkörpern, Einzelfasern, Faserbündeln, Stapelfasern, glatten Filamentgarnen, Bündeln von glatten unverdrehten gestreckten Fasern, sog. Rovings, Fasersträngen, Faserknäueln, Fäden, Gespinsten oder Haufwerken, Gelegen, Geweben, Geflechten, Gewirken oder Gestricken, zwischen den beiden Polymerschichten angeordnet, durch wenigstens einen Walzenspalt unter Druckbeaufschlagung hindurchgeführt.

Auch bevorzugt werden 2- oder 3-dimensionale Gerüstkörper, Einzelfasern, Faserbündel, Stapelfasern, glatte Filamentgarne, Bündel von glatten unverdrehten gestreckten Fasern, sog. Rovings, Faserstränge, Faserknäuel, Fäden, Gespinste oder Haufwerke, Gelege, Gewebe, Geflechte, Gewirke oder Gestricke aus CNT, die mit Polymeren beschichtet sind, durch wenigstens einen Walzenspalt unter Druckbeaufschlagung hindurchgeführt. Selbstverständlich können auch mit Polymeren beschichtete CNT mit Folien, Bändern oder Blöcken aus Polymeren und/oder unbeschichtete CNT in beliebiger Materiallagenfolge unter Druckbeaufschlagung durch wenigstens einen Walzenspalt hindurch geführt werden.

Es ist auch möglich, dass die genannten Formen der Metalle zusammen mit den genannten Formen der Polymere und den CNT zu Flächengebilden enthaltend CNT, Metalle und Polymere verarbeitet werden.

Beispielsweise kann das Metall und/oder Polymer und die CNT sowie die beschichteten CNT beispielsweise durch 1, 2, 3, 4, 5 oder 6 und fallweise noch weitere Walzenspalte unter Druckbeaufschlagung hindurchgeführt werden.

In der Regel wird das Metall und/oder Polymer und die CNT durch eine Zahl von Walzenspalten und unter einer Druckbeaufschlagung hindurchgeführt, bis die gewünschte Schichtdicke und/oder Homogenität der Schichten erreicht ist.

Die einfachste Form ist das Durchführen der Materiallagen, beispielsweise einer Folie, einer Platte oder eines Blockes eines Polymers oder einer Folie, eines Bandes oder eines Bleches eines Metalls und der CNT durch einen durch wenigstens zwei Walzen begrenzten Walzenspalt. Entsprechend der gewählten Schichtung im Flächengebilde werden zwei Schichten des gleichen oder unterschiedlicher Metalle und dazwischen liegend CNT, oder die Schichten von zwei gleichen oder unterschiedlichen Polymeren und dazwischen liegend CNT, durch den Walzenspalt geführt. Sinngemäss können nacheinander oder gleichzeitig weitere Materiallagen durch den Walzenspalt oder die Walzenspalte durchgeführt werden. In anderer Weise kann ein erstes Walzprodukt mittig gefaltet werden und erneut durch denselben oder einen weiteren Walzenspalt geführt werden. Das Verfahren ist ein- oder mehrfach wiederholbar, so dass ein mehr- oder vielschichtiges Flächengebilde hergestellt wird.

Im Walzenspalt können die Materiallagen eine Dimensionsänderung erfahren, d.h. in der Regel werden die Materiallagen unter Dickenabnahme sich fallweise in der Breite und insbesondere in der Länge ausdehnen. Die Dickenabnahme in einem Walzstich kann beispielsweise von 0,5 bis 50%, bezogen auf die ursprüngliche Dicke einer Materiallage, betragen. Die Dicke des Materials nach allen Walzstichen kann 0,1 bis 99 %, bezogen auf die Summe der ursprünglichen Dicken der Materiallagen, betragen. Das Walzen kann durch Warmwalzen oder Kaltwalzen oder durch Warm- und anschliessend Kaltwalzen erfolgen. Die Walztemperatur richtet sich u.a. auch nach den Verarbeitungstemperaturen, wie den Erweichungstemperaturen der eingesetzten Materialien. Ausser dem Walzen mittels zwei Walzen, kann auch eine oder mehrere Walzen auf einer Unterlage abrollen, wobei die zu walzenden Materialien zwischen der Unterlage und der Walze bearbeitet werden. In anderer Weise können die Materialien durch zwei oder mehrere Walzenspalte, beispielsweise durch 2 Walzenspalte mittels 3 oder 4 Walzen oder durch 3 Walzenspalte mittels 4 bis 6 Walzen usw. geführt werden. Somit stellt das erfindungsgemässe Flächengebilde ein Walzprodukt dar.

Entsprechend dem Energieeintrag beim Walzen in die Materialien, z.B. Metall und/oder Polymer während dem oder den Walzvorgängen kann die Dicke der einzelnen Schichten, resp. Lagen, verändert werden. Fallweise kann die Struktur und die Dicke der CNT-Lage oder-Lagen durch den Walzprozess gesteuert werden. Mit zunehmendem Energieeintrag durch die Walzen kann die Dicke der einzelnen Schichten reduziert und die jeweilige Schicht bezüglich ihrer Ausdehnung in der Fläche vergrössert werden. Mit dem Walzprozess werden die Materialien und dabei besonders die Metalle oder Polymere und mit den CNT aufs innigste miteinander verbunden oder durchdringen einander. Z.B. kann es sich um ein mechanisches Legieren handeln. Durch die zunehmende Ausdehnung der Materialien in der Fläche unter Dickenabnahme der einzelnen Schichten, können Zwischenschichten aus Metall oder Polymeren sich soweit verdünnen, dass sich zwei einer Zwischenschicht anliegende CNT-Lagen zumindest punktuell oder teilflächig berühren. Damit gelingt es die hervorragenden Eigenschaften der CNT, beispielsweise die Wärmeleitfähigkeit und die elektrische Leitfähigkeit der CNT, einerseits in der Länge und Breite sowie in der Dicke im Flächengebilde beizubehalten, ohne die Duktilität des Metalls, resp. die Elastizität des Polymers, massgeblich zu verringern.

Um zu Flächengebilden mit einer grossen Zahl an CNT-Lagen zu gelangen, kann beispielsweise ein Flächengebilde des Aufbaues Metallschicht oder Polymerschicht/CNT/Metall- oder Polymerschicht erzeugt und dieses Material, zweioder mehrfach übereinander gelegt oder gefaltet, einem oder mehreren Walzvorgängen unterzogen werden. In anderer beispielhafter Ausführungsform kann das Flächengebilde ein Walzprodukt darstellen, wobei ein erstes Walzprodukt mit hohem CNT-Gehalt und ein zweites Walzprodukt geringeren CNT-Gehaltes, d.h. zwei unterschiedliche Varianten des Flächengebildes, in einem nachfolgenden Walzvorgang zu einem weiteren Walzprodukt in Form des Flächengebildes verarbeitet werden. Entsprechend können auch eine oder mehrere reine Metallschichten (ohne CNT) oder eine oder mehrere Polymerschichten (ohne CNT) in wenigstens einem weiteren Walzvorgang mit einer oder mehreren Schichten des erfindungsgemässen Flächengebildes (enthaltend CNT) zu einem weiteren Walzprodukt verarbeitet werden. Bei der Verwendung insbesondere von Aluminiumfolien, -bändern oder-blechen kann das Aluminium thixotrope Eigenschaften aufweisen. Ein solches Metall ist beispielsweise erhältlich durch Schmelzen von Aluminium oder Aluminiumlegierungen und rasches Abkühlen unter stetem Rühren bis zur Erstarrung.

Mit dem beschriebenen Verfahren können die den CNT innewohnenden Eigenschaften, die oft eine gezielte Verarbeitung verunmöglichen, wie ein geringeres spezifisches Gewicht gegenüber dem spezifischen Gewicht von Metallen und die schlechte Benetzbarkeit der CNT durch Metalle, überwunden werden. So können als Beispiel für die unterschiedliche Dichte für Aluminium 2,7 g/cm³ und für die CNT 1,3 g/cm³ angegeben werden.

Vorliegendes erfindungsgemässes Flächengebilde ist demnach durch Walzen zu den Walzprodukten, wie den Folien, Bändern, Blechen oder Blöcken, herstellbar.

Die erfindungsgemässen Flächengebilde, auch als daraus hergestellte oder abgeleitete Halbzeuge, Formkörper etc., weisen z.B. eine mehr oder weniger ausgeprägte Anisotropie in der Struktur und mechanischen und physikalischen Eigenschaften, wie elektrische Leitfähigkeit, Wärmeleitfähigkeit, Festigkeit, sowohl auf Zug, wie auf Druck, und Duktilität auf.

Die Anwendungen der erfindungsgemässen Flächengebilde sowie Halbzeuge, Formkörper etc. daraus, liegen im Bereich der hochfesten Verbundmaterialien, der Energieübertragung, der Energiespeicher, der Kondensatoren, der Energiekollektoren, Antennen, sog. RFID-Etiketten oder-Tags (Radio Frequency Identification Tags), sog Smart-Tags, Heizdrähte oder Heizflächen, der Neutronenfänger, der Strahlenmoderierung, des Abfangens von Strahlen oder der Erzeugung von Schichten zum Strahlenschutz. Das Material kann zur Ableitung von elektrostatischen Ladungen herangezogen werden. Weitere Verwendungsmöglichkeiten sind Leiterplatten, Verdrahtungen oder Schaltkreise in elektronischen Geräten und Apparaturen. Die erfindungsgemässen Flächengebilde, z.B. in Form von Folien, Bändern und Blechen oder deren Verarbeitungsprodukte, enthaltend Metalle, weisen, neben den genannten Eigenschaften, wie hohe Leitfähigkeit für Wärme und Elektrizität, eine hohe Zugfestigkeit, Bieg- und Verformbarkeit und Formstabilität auf. Bei gleicher oder annähernd gleicher Dicke der Metallschicht kann sich die Zugfestigkeit durch die CNT gegenüber der reinen Metallschicht beispielsweise verfünffachen. Die erfindungsgemässen Flächengebilde, enthaltend Polymere, weisen hervorragende Eigenschaften bezüglich Zugfestigkeit, Bieg- und Verformbarkeit, Formstabilität, auf. Aus Polymerfolien enthaltend CNT in wenigstens einer Lage, können beispielsweise Antennen, sog. RFID-Etiketten oder-Tags (Radio Frequency Identification Tags), sog Smart-Tags, Heizdrähte, Heizflächen, Heizpaneele usw. erzeugt werden. Die CNT sind ideale Absorber für Mikrowellen. Deshalb lassen sich z.B. geschichtete Polymer/CNT-Folien miteinander verschweissen, indem man die Folien durch ein Mikrowellenfeld führt. Durch die Absorption der Energie der Mikrowellen wird das Polymer stark erhitzt und bewirkt ein Verschweissen mit anliegenden Polymerschichten.
Auf eine geringe thermische Expansion der Materialien ist hinzuweisen. Je nach den Materialien kann sich deren Kriechdehnung verbessern. Auch eine Rissausbreitung kann durch die CNT im Metall reduziert oder verhindert werden.

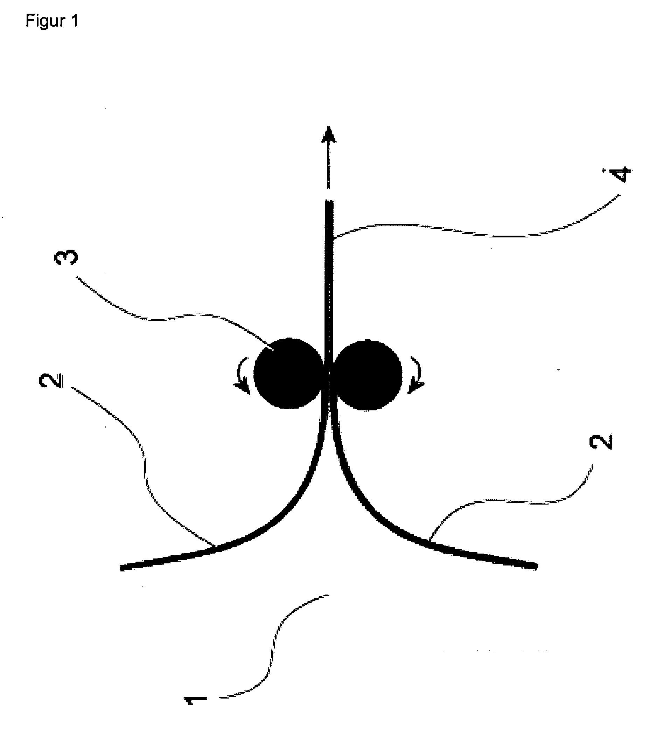

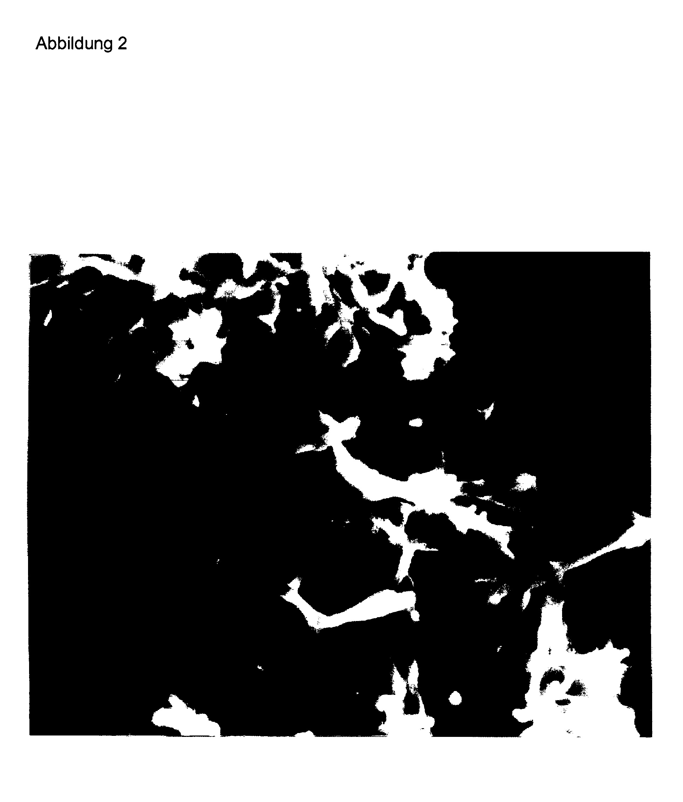

Die Figur 1 und die Abbildung 2 zeigen den vorliegenden Walzprozess und eine CNT-Struktur.

In Figur 1 ist ein geeignetes Walzverfahren schematisch dargestellt. Beispielsweise eine Metallfolie (2) wird aus zwei Vorräten, beispielsweise Folienwickeln oder Coils (nicht gezeigt), kontinuierlich abgehaspelt und einem Walzenspalt, der durch die beiden Walzen (3) gebildet wird, zugeführt. Die Walzen sind in einem Walzgerüst gelagert und werden durch einen Antrieb in Drehung versetzt. Diese Teile sind der Übersichtlichkeit halber nicht eingezeichnet. Die Walzen (3) können fallweise beheizt oder auch gekühlt werden. Aus einem dritten Vorrat werden die CNT (1) zwischen den beiden Metallfolien dem Walzenspalt zugeführt. Die Walzen werden in einem vorbestimmten Masse zusammengepresst und entsprechend der Drehung der Walzen (3) werden die beiden Metallfolien und dazwischen liegend die CNT (1) im Walzenspalt verpresst. Je nach Pressdruck findet eine Dimensionsänderung, wie eine Dickenreduktion, an den durch den Walzenspalt geführten Materialien statt. Insbesondere werden das Metall und die CNT durch den Druck innig im Metall eingebettet.

Abbildung 2 zeigt eine Schwammstruktur aus CNT, wie sie beispielsweise zur Herstellung vorliegenden Flächengebilde eingesetzt werden kann, durch ein Mikroskop in starker Vergrösserung gesehen.

## Patentansprüche

1. Flächengebilde enthaltend Kohlenstoffnanoröhrchen (CNT),
**dadurch gekennzeichnet, dass**
im Flächengebilde wenigstens eine Schicht eines Metalls und/oder wenigstens eine Schicht eines Polymers und abwechslungsweise mit wenigstens einer Lage CNT übereinander geschichtet vorliegen.

2. Flächengebilde gemäss Anspruch 1, **dadurch gekennzeichnet, dass** das Flächengebilde in Form einer Folie, eines Bandes oder eines Bleches, enthaltend das Metall, vorliegt.

3. Flächengebilde gemäss Anspruch 1, **dadurch gekennzeichnet, dass**, das Flächengebilde in Form einer Folie, eines Bandes oder eines Blockes, enthaltend das Polymer, vorliegt.

4. Flächengebilde gemäss Ansprüchen 1 und 2, **dadurch gekennzeichnet, dass** das Metall in einer oder mehreren Schichten vorliegt und die einzelnen Schichten des Metalls eine Dicke von 4,5 µm bis 5'000 µm, vorteilhaft von 10 µm bis 1'000 µm, aufweisen.

5. Flächengebilde gemäss Ansprüchen 1 und 3, **dadurch gekennzeichnet, dass** das Polymer in einer oder mehreren Schichten vorliegt und die einzelnen Schichten des Polymers eine Dicke von 7 µm bis 5'000 µm, vorteilhaft von 15 µm bis 1'000 µm, aufweisen.

6. Flächengebilde gemäss Ansprüchen 1 bis 5, **dadurch gekennzeichnet, dass** die Dicken der einzelnen Lagen der CNT von 10 nm bis 100'000 nm, vorteilhaft von 20 nm bis 50'000 nm, betragen.

7. Flächengebilde gemäss Ansprüchen 1 bis 6, **dadurch gekennzeichnet, dass** innerhalb des Flächengebilde die Schichten aus Metall und/oder Kunststoff abwechslungsweise mit Lagen aus CNT geschichtet sind.

8. Flächengebilde gemäss Ansprüchen 1, 2, 4, 6 und 7, **dadurch gekennzeichnet, dass** innerhalb des Flächengebilde wenigstens eine Schicht, zweckmässig 2 oder mehrere Schichten eines Metalls, abwechslungsweise mit wenigstens einer Lage aus CNT, geschichtet sind.

9. Flächengebilde gemäss Ansprüchen 1, 3 und 5 bis 7, **dadurch gekennzeichnet, dass** innerhalb des Flächengebilde wenigstens eine, zweckmässig 2 oder mehrere Schichten eines Polymers abwechslungsweise mit wenigstens einer Lage aus CNT geschichtet sind.

10. Flächengebilde gemäss Ansprüchen 1 bis 9, **dadurch gekennzeichnet, dass** in der Dicke des Flächengebilde 1 bis 1000, zweckmässig 1 bis 500, vorzugsweise 1 bis 10 und insbesondere 1 bis 3, CNT-Lagen angeordnet sind.

11. Flächengebilde gemäss Ansprüchen 1 bis 10, **dadurch gekennzeichnet, dass** die CNT-Schichten als 2- oder 3-dimensionale Gerüstkörper, Einzelfasern, Faserbündel, Stapelfasern, glatte Filamentgarne, Bündel von glatten unverdrehten gestreckten Fasern, Rovings, Faserstränge, Faserknäuel, Fäden, Gespinste oder Haufwerke, Gelege, Gewebe, Geflechte, Gewirke oder Gestricke, bestehend oder enthaltend CNT, angeordnet sind.

12. Flächengebilde gemäss Ansprüchen 1, 2, 4, 6, 7, 8, 10 und 11, **dadurch gekennzeichnet, dass** als Metalle Eisen- und Nichteisenmetalle, Edelmetalle, zweckmässig Eisenmetalle aus der Reihe des Eisens, Kobalts und Nickels, deren Legierungen sowie Stähle, Nichteisenmetallen, zweckmässig Aluminium, Magnesium und Titan sowie deren Legierungen, Metalle aus der Reihe Vanadium, Chrom, Mangan, Kupfer, Zink, Zinn, Tantal oder Wolfram und Legierungen davon oder die Legierungen aus der Reihe von Messing und Bronze oder Metalle aus der Reihe Rhodium, Palladium, Platin, Gold und Silber, sortenrein oder in Mischung untereinander, enthalten sind.

13. Flächengebilde gemäss Anspruch 12, **dadurch gekennzeichnet, dass** als Metall Aluminium oder dessen Legierungen als Folie, Band oder Blech oder Abschnitten davon, eingesetzt werden.

14. Flächengebilde gemäss Ansprüchen 1, 3, 5, 6, 7, 9, 10 und 11, **dadurch gekennzeichnet, dass** als Polymere thermoplastische, elastische oder duroplastische Polymere, vorzugsweise Polyolefine, Cycloolefin-Copolymere, Polyamide, Polyester, Polyacrylnitril, Polystyrole, Polycarbonate, Polyvinylchlorid, Polyvinylacetat, Styrol-Butadien-Copolymere, AcrylnitrilButadien-Copolymere, Polyurethane, Polyacrylate und Copolymere, Alkydharze, Epoxide, Phenol-Formaldehydharze, Harnstoff-Formaldehydharze, sortenrein oder im Gemisch untereinander enthalten sind.

15. Flächengebilde gemäss Ansprüchen 1 bis 14, **dadurch gekennzeichnet, dass** die CNT einen Durchmesser von 0,4 nm bis 50 nm und eine Länge von 5 nm bis 50'000 nm aufweisen.

16. Flächengebilde gemäss Ansprüchen 1 bis 15, **dadurch gekennzeichnet, dass** das Flächengebilde CNT in Mengen von 0,1 bis 50 Gew.-%, bezogen auf das Flächengebilde, zweckmässig Mengen an CNT von 0,3 bis 40 Gew.-%, bevorzugt Mengen an CNT von 0,5 bis 20 Gew.-% und insbesondere Mengen an CNT von 1 bis 6 Gew.-% enthält.

17. Flächengebilde gemäss Anspruch 13, **dadurch gekennzeichnet, dass** Aluminium oder eine Aluminiumlegierung das Metall im Flächengebilde darstellt und das Flächengebilde 0,5 bis 10 Gew.% CNT, bevorzugt 3 bis 6 Gew.-%, CNT, enthält.

18. Verfahren zur Herstellung eines Flächengebildes nach Anspruch 1, **dadurch gekennzeichnet, dass** das Metall in Form von wenigstens einer Folie, einem Band oder einem Blech und/oder die Polymere in Form von wenigstens einer Folie, einem Band oder einem Block und die CNT in Form von wenigstens einem Gerüstkörper, eines Geleges, eines Gewirkes oder eines Gewebes oder als Fasern, als Faserbündel, als Fäden, als Gespinst oder als Haufwerk, oder die Metalle oder Polymere als Beschichtung eines 2- oder 3-dimensionalen Gerüstkörpers, Einzelfasern, Faserbündeln, Stapelfasern, glatte Filamentgarne, Bündel von glatten unverdrehten gestreckten Fasern, Rovings, Fasersträngen, Faserknäueln, Fäden, Gespinsten oder Haufwerken, Gelegen, Geweben, Geflechten, Gewirken oder Gestricken aus CNT in wenigstens einer Lage vorliegend, durch wenigstens einen Walzenspalt unter Druckbeaufschlagung hindurchgeführt.

19. Verfahren zur Herstellung eines Flächengebildes nach Anspruch 18, **dadurch gekennzeichnet, dass** das Metall in Form von 2 Folien, Bändern oder Blechen und die CNT in Form von 2- oder 3-dimensionale Gerüstkörpern, Einzelfasern, Faserbündel, Stapelfasern, glattes Filamentgarn, Bündel von glatten unverdrehten gestreckten Fasern, Rovings, Faserstränge, Faserknäuel, Fäden, Gespinste oder Haufwerke, Gelegen, Geflechten, Gewirken oder Geweben, zwischen den beiden Metallschichtenangeordnet, durch wenigstens einen Walzenspalt unter Druckbeaufschlagung hindurchgeführt werden.

20. Verfahren zur Herstellung eines Flächengebildes nach Anspruch 18, **dadurch gekennzeichnet, dass** das Polymer in Form von 2 Folien, Bändern oder Blöcken und die CNT in Form von 2- oder 3-dimensionale Gerüstkörper, Einzelfasern, Faserbündel, Stapelfasern, glattes Filamentgarn, Bündel von glatten unverdrehten gestreckten Fasern, Rovings, Faserstränge, Faserknäuel, Fäden, Gespinste oder Haufwerke, Gelegen, Geflechten, Gewirken oder Geweben, zwischen den beiden Polymerschichten angeordnet, durch wenigstens einen Walzenspalt unter Druckbeaufschlagung hindurchgeführt werden.

21. Verfahren zur Herstellung eines Flächengebildes nach Anspruch 18, **dadurch gekennzeichnet, dass** 2- oder 3-dimensionale Gerüstkörper, Einzeifasern, Faserbündel, Stapelfasern, glatte Filamentgarne, Bündel von glatten unverdrehten gestreckten Fasern, sog. Rovings, Faserstränge, Faserknäuel, Fäden, Gespinste oder Haufwerke, Gelege, Gewebe, Geflechte, Gewirke oder Gestricke aus CNT, mit Metall beschichtet und durch wenigstens einen Walzenspalt unter Druckbeaufschlagung hindurchgeführt werden.

22. Verfahren zur Herstellung eines Flächengebildes nach Anspruch 18, **dadurch gekennzeichnet, dass** 2- oder 3-dimensionale Gerüstkörper, Einzelfasern, Faserbündel, Stapelfasern, glatte Filamentgarne, Bündel von glatten unverdrehten gestreckten Fasern, Rovings, Faserstränge, Faserknäuel, Fäden, Gespinste oder Haufwerke, Gelege, Gewebe, Geflechte, Gewirke oder Gestricke aus CNT, mit Polymeren beschichtet und durch wenigstens einen Walzenspalt unter Druckbeaufschlagung hindurchgeführt werden.

23. Verfahren zur Herstellung eines Flächengebildes nach Ansprüchen 18 bis 22, **dadurch gekennzeichnet, dass** Metalle, Polymere und CNT durch wenigstens einen Walzenspalt unter Druckbeaufschlagung hindurchgeführt und zu Flächengebilden enthaltend CNT, Metalle und Polymere verarbeitet werden.

24. Verfahren zur Herstellung eines Flächengebildes nach Ansprüchen 18 bis 23, **dadurch gekennzeichnet, dass** das Metall und/oder Polymer und die CNT durch 1, 2, 3, 4, 5 oder 6 Walzenspalte unter Druckbeaufschlagung hindurchgeführt werden.

25. Verfahren zur Herstellung eines Flächengebildes nach Ansprüchen 18 bis 24, **dadurch gekennzeichnet, dass** ein erstes Flächengebilde des Aufbaues Metallschicht oder Polymerschicht, CNT, Metall- oder Polymerschicht in einem oder mehreren Walzvorgängen erzeugt und dieses Material, zwei- oder mehrfach übereinander gelegt oder gefaltet, einem oder mehreren weiteren Walzvorgängen unterzogen wird.
